# EUROPÄISCHE PATENTSCHRIFT

(11) **EP 0 185 936 B1**
(45) Veröffentlichungstag und Bekanntmachung des Hinweises auf die Patenterteilung: **13.01.1993**
(21) Anmeldenummer: 85114811.4
(22) Anmeldetag: 21.11.1985
(51) Int. Cl.: H04L 12/52, H04Q 11/04

(54) **Schnittstellenbaustein zur Verbindung von Datenquellen mit Datensenken und Vermittlungssysteme mit solchen Schnittstellenbausteinen**
Interface circuit arrangement for connecting data sources with data sinks, and switching systems with such an interface circuit arrangement
Montage de circuit d'interface pour la connexion de sources de données avec récepteurs de données et systèmes de commutation avec de tels montages de circuit d'interface

(30) Priorität: 14.12.1984 US 682228; 14.12.1984 US 682038
(43) Veröffentlichungstag der Anmeldung: 02.07.1986
(73) Patentinhaber: ALCATEL N.V., NL-1077 XX Amsterdam (NL)
(72) Erfinder: Toegel, Herbert Joseph, Middlebury, CT 06762 (US); Yudichak, Joseph Ronald, Madison, CT 06443 (US); Gilsdorf, John Francis, Madison, CT 06443 (US); Chalet, Alain Rene Ghislain, B-1900 Overijse (BE)
(74) Vertreter: Villinger, Bernhard, Dipl.-Ing.

(56) Entgegenhaltungen:
- EP-A- 0 045 066
- WO-A-84/05003
- CH-A- 517 419
- FR-A- 2 400 301
- GB-A- 2 016 866
- GB-A- 2 066 623
- GB-A- 2 097 634
- ELEKTRONICA, Band 32, Nr. 5, März 1984, Seiten 23-32
- ELECTRICAL COMMUNICATION, Band 59, Nr. 1/2, 1985, Seiten 112-119
- ELECTRICAL COMMUNICATION, Band 56, Nr. 1, 1981, Seiten 44-56

## Beschreibung

Die Erfindung betrifft einen Schnittstellenbaustein zur Verbindung von Datenquellen mit Datensenken. Sie betrifft weiter ein Vermittlungssystem mit einem Digital-Koppelnetz und einer Vielzahl daran angeschlossener Modulsteuereinheiten, über die der Zugang zum Digital-Koppelnetz erfolgt. Sie betrifft weiter ein Vermittlungssystem mit einem Digital-Koppelnetz und mindestens einer Modulsteuereinheit, über die Zugang zum Digital-Koppelnetz möglich ist.

Die Verbreitung von Geräten, die dem Datenaustausch dienen, wie Computerterminals, schnelle Drucker und eine Vielzahl anderer heute bekannter Geräte, hat zu einer Art Dilemma in der Übertragungstechnik geführt.

Es ist bekannt, daß die Grundlage eines zukünftigen integrierten Nachrichtennetzes das heutige Fernsprechnetz ist, das auf konventionellen zentralgesteuerten Vermittlungsstellen zur Herstellung von Durchschalteverbindungen aufbaut. Eine Schwierigkeit, die mit solchen zentralgesteuerten Vermittlungsstellen verbunden ist, besteht darin, daß das ganze angeschlossene Netz schwer in Mitleidenschaft gezogen wird, wenn in der zentralgesteuerten Vermittlungsstelle ein Fehler auftritt. Beim Auftreten eines Fehlers ist ein wesentlicher Teil, wenn nicht alle, der angeschlossenen Teilnehmer betroffen. Da die zentralgesteuerte Vermittlungsstelle auf Durchschalteverbindungen beschränkt ist, muß auch jede Datenverbindung zwischen zwei beliebigen Teilnehmern über die zentralgesteuerte Vermittlungsstelle laufen. Außerdem ist der Anschluß solcher Datenverbindungen schwierig und erfordert üblicherweise Modems, die die herkömmliche Fernsprechausrüstung an die beim Betrieb von Datengeräten benötigten Signale anpaßt. Da die Vielfalt an Datengeräten ebenso wie deren Datenübertragungsgeschwindigkeiten immer mehr zunimmt, werden solche Modems immer komplexer und schwieriger herzustellen. Die Ideallösung würde gegenwärtig so aussehen, gänzlich neue Vermittlungssysteme einzuführen oder Vermittlungsstellen, die in der Lage sind, eine Vielzahl von Datenformaten und Übertragungsgeschwindigkeiten zu verarbeiten. In den meisten Fällen würde dies jedoch sehr teuer sein, da viele der gegenwärtigen Vermittlungsstellen noch weit entfernt vom Ende ihrer nutzbaren Lebensdauer sind.

Eine Alternative zu einer zentralgesteuerten Vermittlungsstelle ist eine Vermittlungsstelle mit verteilter Steuerung, beispielsweise eine digitale Vermittlungsstelle System 12 der ITT. Bei dieser Systemarchitektur ist eine Vielzahl von Zugangseinheiten durch ein Digital-Koppelnetz miteinander verbunden, wobei das Digital-Koppelnetz dazu vorgesehen ist, Übertragungswege zwischen den Zugangseinheiten herzustellen. Jede Zugangseinheit stellt selbst die Übertragungswege zwischen den angeschlossenen Teilnehmern her und baut auch Übertragungswege durch das Digital-Koppelnetz auf, wenn ein an eine andere Zugangseinheit angeschlossener Teilnehmer gerufen wird. Ein bedeutender Vorteil einer Vermittlungsstelle mit verteilter Steuerung liegt darin, daß beim Ausfall einer einzelnen Komponente nicht die gesamte Vermittlungsstelle betroffen ist.

Gegenwärtige Vermittlungsstellen sind im allgemeinen nur in der Lage, eine beschränkte Anzahl verschiedenartiger Geräte zu bedienen. Bei einer Vermittlungsstelle mit verteilter Steuerung kann eine Erweiterung modular erfolgen, ohne die ganze Vermittlungsstelle grundsätzlich zu ändern, wenn ein weiterer, gegenwärtiger oder zukünftiger, Datendienst integriert werden soll.

Es ist folglich offensichtlich, daß mit der Zunahme und mit zunehmender Vielfalt von Datendiensten und mit dem vorauszusehenden steigenden Wachstum derselben, ein Bindeglied erforderlich ist, das einerseits mit gegenwärtigen Vermittlungssystemen zusammenarbeitet und andererseits eine Vielfalt von Datendiensten gestattet, ohne das Erfordernis, die gegenwärtigen Vermittlungsstellen aufzugeben. Außerdem soll es durch ein solches Bindeglied unnötig werden, bei einer bestehenden Vermittlungsstelle mit Durchschalteverbindungen ein davon völlig getrenntes Datenvermittlungssystem aufzupfropfen.

Der Schnittstellenbaustein nach der Lehre des Anspuchs 1 stellt ein solches Bindeglied her. Ein solcher Schnittstellenbaustein ist in der Lage, alle gegenwärtigen und voraussehbaren zukünftigen Datenendgeräte zu bedienen.

Er kann durch die angeschlossenen Geräte gesteuert werden.

Die ältere, am 20.12.1984 veröffentlichte PCT-Anmeldung W0-A-84/05003 mit Priorität vom 09.06.1983 beschreibt ein Vermittlungssystem, das Schnittstellenbausteine enthält, dort digital line controllers genannt, die mit den Schnittstellenbausteinen der vorliegenden Erfindung insoweit übereinstimmen, wie dies für die im dort beschriebenen Vermittlungssystem konkret auftretende Schnittstellenaufgabe erforderlich ist. Eine Ausgestaltung im Hinblick auf eine Integration eines zukünftigen Datendienstes ist dort nicht gefordert und auch nicht durchgeführt.

Der Schnittstellenbaustein gemäß der vorliegenden Erfindung stimmt auch in gewissem Maße mit modernen Vermittlungselementen überein, beispielsweise dem in der GB 2 016 866 A beschriebenen. Vermittlungselemente, auch das genannte, sind aber in erster Linie dazu bestimmt, mit anderen, gleichartigen Vermittlungselementen Nachrichten auszutauschen. Es darf nur eine Art von Eingängen und eine darauf abgestimmte Art von Ausgängen geben.

Weitere vorteilhafte Ausgestaltungen und Anwendungsmöglichkeiten der Erfindung sind den weiteren Ansprüchen und der Beschreibung zu entnehmen.

Im folgenden wird die Erfindung und ihre Anwendung anhand von Ausführungsbeispielen unter Zuhilfenahme der beiliegenden Zeichnung weiter erläutert.
- Figur 1: zeigt ein Blockschaltbild eines Schnittstellenbausteins, das die Grundzüge der Erfindung trägt;
- Figur 2: zeigt ein detailliertes Blockschaltbild einer Ausführungsform des Schnittstellenbausteins nach Figur 1;
- Figur 3: zeigt ein Blockschaltbild eines Nachrichtensystems, in dem der in Figur 1 und 2 gezeigte Schnittstellenbaustein eingesetzt ist;
- Figur 4: zeigt ein Blockschaltbild eines Vermittlungssystems mit verteilter Steuerung, das den in Figur 1 und 2 gezeigten Schnittstellenbaustein enthält;
- Figur 5: zeigt ein Blockschaltbild eines anderen Nachrichtensystems, in dem der in Figur 1 und 2 gezeigte Schnittstellenbaustein eingesetzt ist, und
- Figur 6: zeigt ein Blockschaltbild eines anderen Vermittlungssystems, das den in Figur 1 und 2 gezeigten Schnittstellenbaustein enthält.

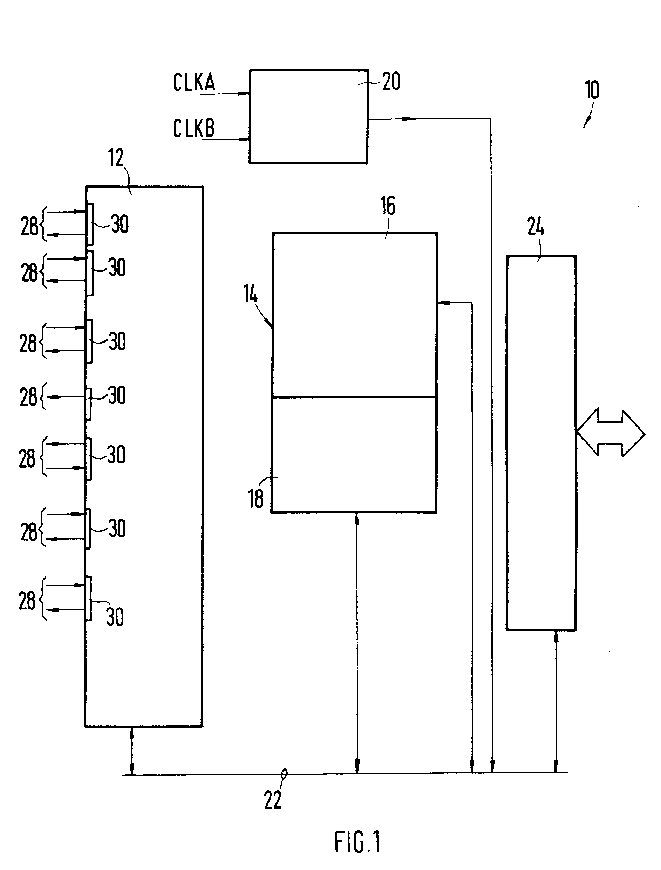

Anhand der Figur 1 wird nun ein Blockschaltbild eines Schnittstellenbausteins 10 beschrieben, der die Grundzüge der vorliegenden Erfindung trägt. Der Schnittstellenbaustein 10 enthält eine Baugruppe 12 zur Verbindung mit einer Mehrzahl von (in Figur 1 nicht gezeigten) Anschlußteilen, eine Baugruppe 14 zum Herstellen einer Vielzahl von Verbindungswegen, eine Baugruppe 20 zur Steuerung des Informationsflusses auf einem internen Bus 22 und eine Schnittstellenbaugruppe 24, über die mindestens mit einem (in Figur 1 ebenfalls nicht gezeigten) Mikrocomputer 26 Verbindung besteht. Die Baugruppe 14 enthält eine Koppeleinrichtung 16 und eine Steuereinrichtung 18.

In einer bevorzugten Ausführungsform enthält die Baugruppe 12 zur Verbindung mit einer Mehrzahl von Anschlußteilen eine Anzahl serieller Ein-/Ausgänge (ports) 28. Jeder serielle Ein-/Ausgang 28 enthält einen Wandler 30 und einen Pufferspeicher 32. Der Wandler 30 besteht aus einem eingangsseitigen Serien-Parallel-Wandler und einem ausgangsseitigen Parallel-Serien-Wandler. Der Pufferspeicher 32 dient der Taktanpassung gegenüber dem internen Bus 22.

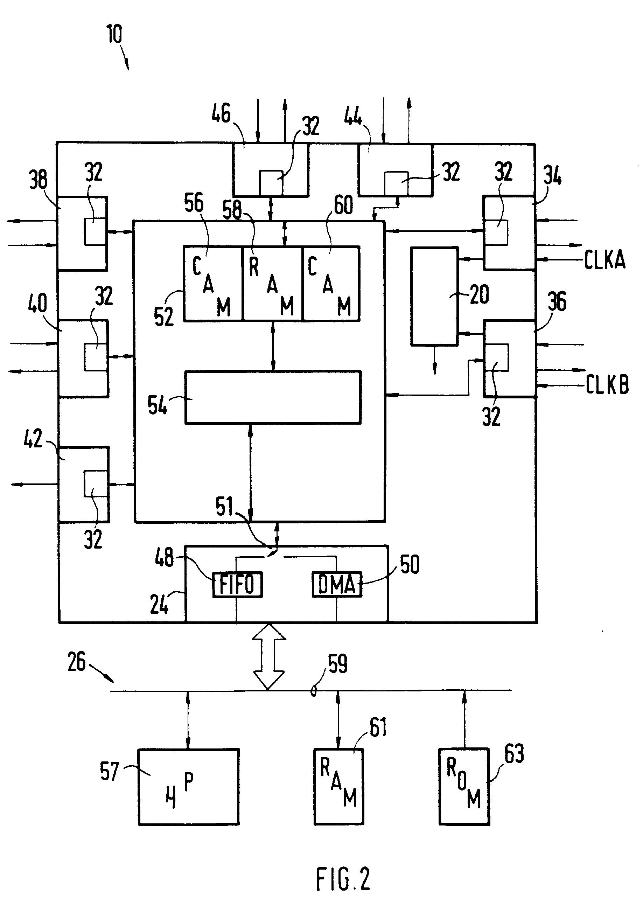

Eine in Figur 2 gezeigte spezielle Ausführungsform weist sieben serielle Ein-/Ausgänge auf. Darunter ist ein erster und ein zweiter Vollduplex-Ein-/Ausgang 34 bzw. 36. Diese sind für Standard-PCM-Signale nach CCITT vorgesehen. Sie arbeiten asynchron zueinander. Aus Zuverlässigkeitsgründen sind zwei gleiche Vollduplex-Ein-/Ausgänge 34 und 36 vorhanden. Jeder der beiden Ein-Ausgänge 34 und 36 weist einen Takteingang CLKA bzw. CLKB auf. In der Baugruppe 20 wird einer der an diesen beiden Takteingängen anliegenden Takte ausgewählt. Jeder der beiden Vollduplex-Ein-/Ausgänge 34 und 36 weist eine Vielzahl bidirektionaler Übertragungskanäle auf. Beispielsweise können 32 Übertragungskanäle pro Ein-/Ausgang vorhanden sein, über die mit einer Übertragungsgeschwindigkeit von mehr als 4 Mbit/s übertragen werden kann.

In dem Schnittstellenbaustein 10 ist weiter ein dritter und ein vierter Vollduplex-Ein-/Ausgang 38 bzw. 40 sowie ein Simplex-Ausgang 42 (fünfter Ein-/Ausgang) vorhanden. Diese dienen dem direkten Anschluß von Teilnehmergeräten, wie z.B. Fernsprechteilnehmergeräte oder Computerterminals. Sie können auf eine Vielzahl von Übertragungsgeschwindigkeiten einstellbar sein und weisen jeweils eine Anzahl unabhängiger Kanäle auf. Der Schnittstellenbaustein 10 ist damit in der Lage, mit nahezu allen gegenwärtigen und zukünftigen digitalen Geräten zu kommunizieren.

Weiter ist ein sechster und ein siebenter Vollduplex-Ein-/Ausgang 44 bzw. 46 vorhanden. Über beide führt je ein Kanal pro Datenrahmen. Damit wird die Vielzahl der an den Schnittstellenbaustein 10 anschließbaren Geräten auf solche mit anderer Wortlänge erweitert. Beispielsweise können daran Geräte mit 64 KBd und 128 KBd angeschlossen werden. Über diese Ein-/Ausgänge können damit Daten an die daran angeschlossenen verhältnismäßig langsamen Endgeräte in einer Weise übertragen werden, die einem kontinuierlichen Datenstrom entspricht, d.h., entweder mit 8 oder mit 16 Bits in einem 125 µs langen Datenrahmen.

Die seriellen Ein-/Ausgänge 28 sind mit dem internen Bus 22 verbunden, der im Zeitmultiplex (TDM) den Datentransport innerhalb des Schnittstellenbausteins 10 besorgt. Der interne Bus 22 wird durch den über den Takteingang CLKA oder CLKB eingegebenen Takt in 512 Zeitschlitze pro Datenrahmen aufgeteilt. Jeder Datenrahmen ist in 32 Kanäle zu je 16 Zeitschlitzen aufgeteilt. Eine Ausführungsform sieht vor, eine Anzahl von Zeitschlitzen pro Kanal, z.B. fünf, für Steuerzwecke zu verwenden. Jeder Zeitschlitz kann 16 Bits Information enthalten. Auf diese Weise kann der Schnittstellenbaustein 10 durch Imkanal-Signalisierung so gesteuert werden, daß ohne besondere Steuerleitungen zu äußeren Baugruppen eine Vielzahl von Nachrichtenwegen aufgebaut werden kann.

Mit dem internen Bus 22 ist weiter die Schnittstellenbaugruppe 24 verbunden, die einen parallelen Ein-/Ausgang darstellt und die zur Zusammenarbeit mit dem Mikrocomputer 26 geeignet ist. Der Mikrocomputer 26 ist entweder ein 8-Bit- oder ein 16-Bit-Typ.

Die Schnittstellenbaugruppe 24 enthält einen Silospeicher (FIFO) 48 oder eine Baugruppe 50 für direkten Speicherzugriff (DMA) oder beides. Im gezeigten Beispiel ist beides vorhanden. Mit einem Wahlschalter 51 kann dazwischen umgeschaltet werden, so daß sich zwei verschiedene Betriebsarten ergeben.

In den Fällen, in denen auf geringe Kosten Wert gelegt wird, kann ein billigerer Mikrocomputer verwendet werden. Ein solcher Mikrocomputer hat aber meist nicht die Möglichkeit des direkten Speicherzugriffs durch die Baugruppe 50. In diesem Fall wird der Silospeicher 48 durch ein vorherbestimmtes Steuersignal ausgewählt.

In jedem Fall enthält der Mikrocomputer 26 einen Mikroprozessor 57, an den ein Schreib-Lese-Speicher (RAM) 61 und ein Nur-Lese-Speicher (ROM) 63 über einen lokalen Bus 59 angeschlossen sind.

Die Baugruppe 14, die der Herstellung einer Vielzahl von Nachrichtenwegen dient und die in Figur 1 als prinzipiell aus einer Koppeleinrichtung 16 und einer Steuereinrichtung 18 bestehend dargestellt ist, enthält im bevorzugten Ausführungsbeispiel einen Notizblockspeicher 52 und eine Steuereinrichtung 54 zur Steuerung des Notizblockspeichers 52.

Der Notizblockspeicher 52 enthält einen Assoziativspeicher (CAM) 56 für die Zielangabe, einen Schreib-Lese-Speicher (RAM) 58, in dem die zu übertragenden Daten gespeichert werden und einen Assoziativspeicher (CAM) 60 für die Quellenangabe. Die Steuereinrichtung 54 weist eine Vielzahl von Befehlsregistern auf, die Befehle speichern, die jeder über einen der Ein-/Ausgänge 28 oder die Schnittstellenbaugruppe 24 eingehenden Information vorangehen. Damit kann jeder Kanal, der über irgendeinen Ein-/Ausgang führt und der ein korrektes Befehlsabfragesignal liefert, zur Befehlsquelle werden. Er kann anschließend Daten in den Notizblockspeicher 52 oder die verschiedenen damit verbundenen Befehlsregister eingeben oder daraus entnehmen.

Eine mögliche Betriebsart sieht so aus, daß ein bestimmter Kanal, der über einen bestimmten Ein-/Ausgang führt, zur Befehlsquelle wird, wenn er hierzu einen Befehl erhält und daß auf Befehl ein Datentransfer erfolgt. Der Datentransfer erfolgt von einem Ein-/Ausgang an die Stelle des Schreib-Lese-Speichers 58, der im Assoziativspeicher 60 die Quellenangabe für diesen Ein-/Ausgang zugeordnet ist und führt weiter zu dem Ein-/Ausgang, der im Assoziativspeicher 56 als Zielangabe angegeben ist. Jedem Speicherplatz im Schreib-Lese-Speicher 58 ist in jedem der beiden Assoziativspeicher 56 und 60 ein Speicherplatz zugeordnet. Jeder Kanal, der zur Befehlsquelle geworden ist, kann Nachrichtenwege aufbauen, die auch über jeden anderen Kanal laufen können. Er kann überhaupt den ganzen Schnittstellenbaustein 10 steuern.
Dies ist vor allem dann von Bedeutung, wenn eine Störung auftritt und diese Störung an einem Ein-/Ausgang oder auf einem Kanal bemerkt wird, der nicht von der Störung betroffen ist. Es ist dann möglich, daß dasjenige Gerät, das die Störung erkennt, Befehle ausgibt und damit den Datenverkehr so lange umleitet, bis der gestörte Kanal oder Ein-/Ausgang wiederhergestellt ist.

Die Baugruppe 20, die den Informationsfluß auf dem internen Bus 22 steuert, enthält einen Haupttaktgeber für die bitweise Übertragung von Datenrahmen auf dem internen Bus 22 und synchronisiert den Verkehr zwischen der Steuereinrichtung 54 und dem Notizblockspeicher 52.

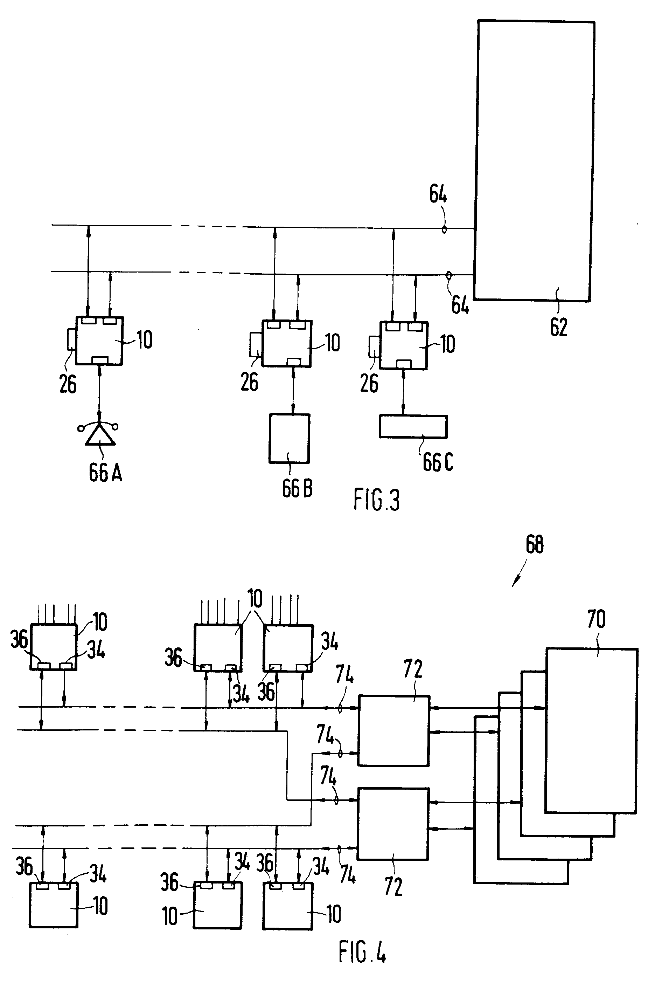

Figur 3 zeigt einen Anwendungsfall eines Schnittstellenbausteins 10. Ein Übermittlungssystem 62 weist eine Reihe von Zwischenleitungen 64 auf, an die eine Anzahl von Schnittstellenbausteinen 10 angeschlossen ist. Jeder Schnittstellenbaustein 10 bedient ein oder mehrere Peripheriegeräte 66, beispielsweise eine Vielzahl von Telephongeräten 66A, eine Nebenstellenanlage 66B oder eine Mehrzahl von Datenterminals 66C. Beim gezeigten Nachrichtensystem sind die ersten und zweiten Vollduplex-Ein-/Ausgänge 34 und 36 mit je einer der Zwischenleitungen 64 verbunden. Die übrigen seriellen Ein-/Ausgänge sind mit Teilnehmerendgeräten verbunden. Um Datenkollisionen zu vermeiden, kann die Anordnung so betrieben werden, daß jedem Schnittstellenbaustein 10 auf jeder Zwischenleitung 64 nur bestimmte Kanäle zugeordnet werden. Weiter kann eine Zwischenleitung 64 für Sendezwecke vorgesehen und nur mit den ersten Vollduplex-Ein-/Ausgängen 34 verbunden und die andere Zwischenleitung 64 für Empfangszwecke vorgesehen und nur mit den zweiten Vollduplex-Ein-/Ausgängen 36 verbunden sein. Außerdem können Mikrocomputer 26 und andere digitale Geräte angeschlossen sein. Datenkollisionen auf den Zwischenleitungen 64 können aber auch durch Verwendung anderer Verfahren, beispielsweise Schiedsrichterverfahren (arbitration), vermieden werden.

Figur 4 zeigt ein Vermittlungssystem 68, das hier in einer Ausführungsform als digitale Vermittlungsstelle mit verteilter Steuerung gezeigt ist. Es weist ein Digital-Koppelnetz 70 und eine Vielzahl daran angeschlossener Modulsteuereinheiten 72 auf. Jede Modulsteuereinheit 72 ist mit zwei Zwischenleitungen 74 verbunden, die je für 32 PCM-Kanäle ausgelegt sind. Zusätzlich, beispielsweise, wenn das Vermittlungssystem 68 eine System-12-Vermittlungsstelle der ITT ist, kann die Modulsteuereinheit 72 Signale zur Takt- und Rahmensynchronisation an die angeschlossenen Schnittstellenbausteine 10 liefern. Der Datenaustausch wird von der Modulsteuereinheit 72 gesteuert, die die Nachrichtenwege entsprechend ihrer eigenen Befehls- und Steuerstruktur herstellt.

Einer der Hauptvorteile, der sich ergibt, wenn der Schnittstellenbaustein 10 in einem derartigen Vermittlungssystem zum Einsatz kommt, besteht darin, daß die Zuverlässigkeit erhöht werden kann. Dies ergibt sich daraus, daß jeder an System 12 angeschlossene Teilnehmer über den Schnittstellenbaustein 10 an zwei verschiedene Modulsteuereinheiten 72 angeschlossen werden kann. Figur 4 zeigt, daß jeder Schnittstellenbaustein 10 über den ersten Vollduplex-Ein-/Ausgang 34 mit der ihm zugeordneten Modulsteuereinheit 72 und über den zweiten Vollduplex-Ein-/Ausgang 36 mit einer anderen Modulsteuereinheit 72 verbunden ist. Wenn also eine der beiden Modulsteuereinheiten 72 außer Betrieb genommen wird, beispielsweise, um das Programm auf den neuesten Stand zu bringen, dann werden die daran angeschlossenen Teilnehmer über die andere Modulsteuereinheit 72 mit dem Digital-Koppelnetz 70 verbunden. Damit ist für jeden Teilnehmer volle Redundanz der Modulsteuereinheiten gegeben.

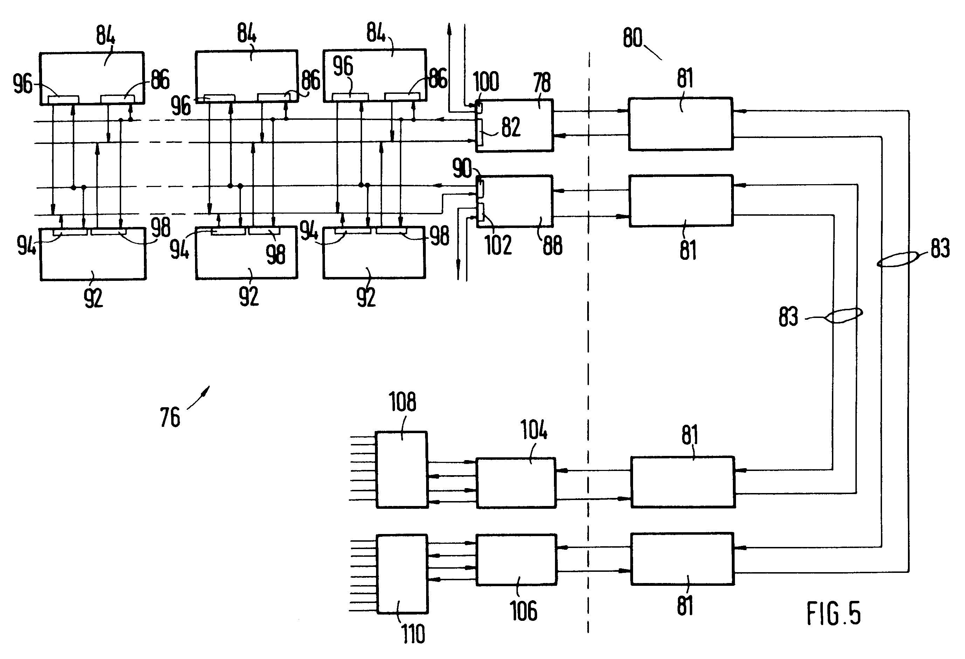

Figur 5 zeigt ein weiteres Nachrichtensystem 76. Es enthält eine Reihe von Schnittstellenbausteinen, wie sie anhand der Figur 1 und 2 beschrieben wurden. Sie sind hier teils als Mutter (master), teils als Tochter (slave) eingesetzt. Ein erster Mutter-Schnittstellenbaustein 78 ist mit einem Übermittlungsabschnitt 80 verbunden. Ein typischer Übermittlungsabschnitt 80 enthält, wie gezeigt, Leitungstreiber 81 und verschiedene Verbindungsleitungen 83. An den ersten Vollduplex-Ein-/Ausgang 82 des ersten Mutter-Schnittstellenbausteins 78 ist über eine Zeitmultiplex-PCM-Leitung eine Reihe von Tochter-Schnittstellenbausteinen 84 angeschlossen und zwar ebenfalls über deren erste Vollduplex-Ein-/Ausgänge 86. An den Übermittlungsabschnitt 80 ist auch ein zweiter Mutter-Schnittstellenbaustein 88 angeschlossen, an deren ersten Vollduplex-Ein-/Ausgang 90 wiederum eine Reihe von Tochter-Schnittstellenbausteinen 92 über deren erste Vollduplex-Ein-/Ausgänge 94 angeschlossen sind. Um auf einfache Weise Kollisionen auf den Zeitmultiplex-PCM-Leitungen zwischen den Mutter- und Tochter-Schnittstellenbausteinen zu verhindern, ist jedem Tochter-Schnittstellenbaustein 84 und 92 ein Kanal fest zugeordnet. Die Zahl der an einem Mutter-Schnittstellenbaustein 78 und 88 anschließbaren Tochter-Schnittstellenbausteine 84 bzw. 92 ist damit auf die Zahl der über einen Vollduplex-Ein-/Ausgang übertragbaren Kanäle begrenzt. Zusätzlich sind die zweiten Vollduplex-Ein-/Ausgänge 96 und 98 der Tochter-Schnittstellenbausteine 84 bzw. 92 aus Zuverlässigkeitsgründen an die ersten Vollduplex-Ein-/Ausgänge 90 bzw. 82 des anderen Mutter-Schnittstellenbausteins 88 bzw. 78 angeschlossen. Die zweiten Vollduplex-Ein-/Ausgänge 100 und 102 der Mutter-Schnittstellenbausteine 78 bzw. 88 können mit weiteren Tochter-Schnittstellenbausteinen, Vermittlungsstellen oder ähnlichem verbunden sein.

Der Übermittlungsabschnitt 80 kann weiter einen dritten und vierten Mutter-Schnittstellenbaustein 104 bzw. 106 aufweisen. Im Beispiel sind diese Mutter-Schnittstellenbausteine 104 und 106 mit Ortsvermittlungsstellen 108 bzw. 110 verbunden, an die jeweils eine Vielzahl von Teilnehmern angeschlossen ist.

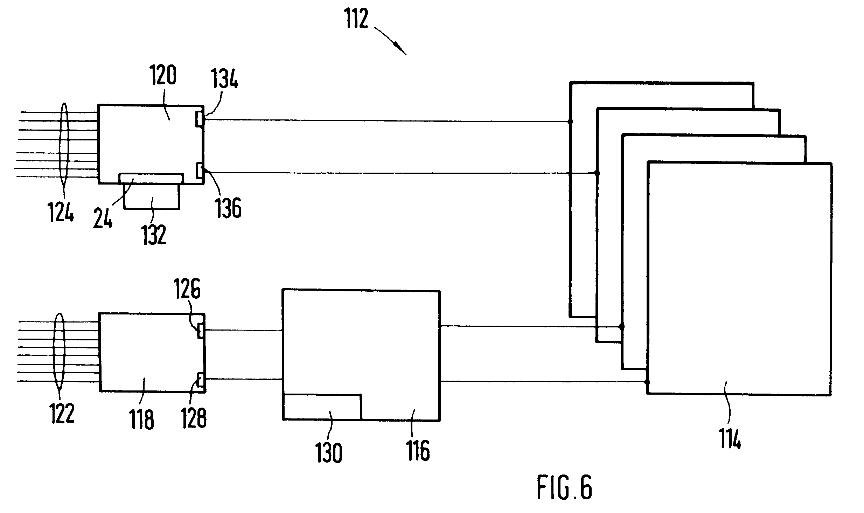

Figur 6 zeigt ein anderes Vermittlungssystem 112, das ein Digital-Koppelnetz 114, eine Modulsteuereinheit 116, einen ersten Schnittstellenbaustein 118, der mit dem Digital-Koppelnetz 114 über die Modulsteuereinheit 116 verbunden ist und einen zweiten Schnittstellenbaustein 120, der direkt mit dem Digital-Koppelnetz 114 verbunden ist, aufweist. Der erste Schnittstellenbaustein 118 stellt über eine Gruppe von Leitungen 122 Verbindungen zu einer Gruppe von Teilnehmern her. Der zweite Schnittstellenbaustein 120 stellt über Leitungen 124 weitere Verbindungen zu einem Teil dieser Teilnehmer her. Die Leitungen 124 sind für die Übertragung von Paketdaten vorgesehen.

Die Verbindung zwischen dem ersten Schnittstellenbaustein 118 und der Modulsteuereinheit 116 erfolgt vorzugsweise über den ersten und zweiten Vollduplex-Ein-/Ausgang 126 bzw. 128 des ersten Schnittstellenbausteins 118. Die Modulsteuereinheit 116 enthält einen ersten Mikrocomputer 130, von dem aus Durchschalteverbindungen durch das Digital-Koppelnetz 114 aufgebaut und wieder getrennt werden.

Der zweite Schnittstellenbaustein 120 enthält vorzugsweise einen zweiten Mikrocomputer 132, der dazu dient, Datenpakete durch das Digital-Koppelnetz 114 zu vermitteln. Der zweite Mikrocomputer 132 ist dabei mit dem zweiten Schnittstellenbaustein 120 vorzugsweise über dessen parallel arbeitende Schnittstellenbaugruppe 24 verbunden. Der zweite Schnittstellenbaustein 120 ist mit dem Digital-Koppelnetz 114 über seinen ersten und zweiten Vollduplex-Ein-/Ausgang 134 bzw. 136 verbunden.

Durch das zuletzt beschriebene Vermittlungssystem 112 ist eine Gruppe von Teilnehmern, die an ein Digital-Koppelnetz angeschlossen sind, mit einem Paketdatennetz verbunden.

### Bezugszeichenliste:

- 10: Schnittstellenbaustein
- 12: Baugruppe zur Verbindung mit einer Mehrzahl von Anschlußteilen
- 14: Baugruppe
- 16: Koppeleinrichtung
- 18: Steuereinrichtung
- 20: Baugruppe
- 22: interner Bus
- 24: Schnittstellenbaugruppe
- 26: Mikrocomputer
- 28: serielle Ein-/Ausgänge (ports)
- 30: Wandler
- 32: Pufferspeicher
- 34: erster Vollduplex-Ein-/Ausgang
- 36: zweiter Vollduplex-Ein-/Ausgang
- 38: dritter Vollduplex-Ein-/Ausgang
- 40: vierter Vollduplex-Ein-/Ausgang
- 42: Simplex-Ausgang (fünfter Ein-/Ausgang)
- 44: sechster Vollduplex-Ein-/Ausgang
- 46: siebenter Vollduplex-Ein-/Ausgang
- 48: Silospeicher (FIFO)
- 50: Baugruppe für direkten Speicherzugriff (DMA)
- 51: Wahlschalter
- 52: Notizblockspeicher
- 54: Steuereinrichtung
- 56: Assoziativspeicher (CAM) für Zielangabe
- 57: Mikroprozessor
- 58: Schreib-Lese-Speicher (RAM)
- 59: lokaler Bus
- 60: Assoziativspeicher (CAM) für Quellenangabe
- 61: Schreib-Lese-Speicher (RAM)
- 62: Übermittlungssystem
- 63: Nur-Lese-Speicher (ROM)
- 64: Zwischenleitung
- 66: Peripheriegeräte
- 66A: Telephongerät
- 66B: Nebenstellenanlage
- 66C: Datenterminal
- 68: Vermittlungssystem
- 70: Digital-Koppelnetz
- 72: Modulsteuereinheit
- 74: Zwischenleitung
- 76: Nachrichtensystem
- 78: erster Mutter-Schnittstellenbaustein
- 80: Übermittlungsabschnitt
- 81: Leitungstreiber
- 82: erster Vollduplex-Ein-/Ausgang
- 83: Verbindungsleitung
- 84: Tochter-Schnittstellenbaustein
- 86: erster Vollduplex-Ein-/Ausgang
- 88: zweiter Mutter-Schnittstellenbaustein
- 90: erster Vollduplex-Ein-/Ausgang
- 92: Tochter-Schnittstellenbaustein
- 94: erster Vollduplex-Ein-/Ausgang
- 96, 98: zweiter Vollduplex-Ein-/Ausgang
- 100, 102: zweiter Vollduplex-Ein-/Ausgang
- 104, 106: dritter, vierter Mutter-Schnittstellenbaustein
- 108, 110: Ortsvermittlungsstelle
- 112: Vermittlungsstelle
- 114: Digital-Koppelnetz
- 116: Modulsteuereinheit
- 118: erster Schnittstellenbaustein
- 120: zweiter Schnittstellenbaustein
- 122: Leitungen
- 124: Leitungen
- 126: erster Vollduplex-Ein-/Ausgang
- 128: zweiter Vollduplex-Ein-/Ausgang
- 130: erster Mikrocomputer
- 132: zweiter Mikrocomputer
- CLKA, CLKB: Takteingang

## Patentansprüche

1. Schnittstellenbaustein (10) zur Verbindung von Datenquellen mit Datensenken,
- mit einer Mehrzahl von Ein- und/oder Ausgängen (24, 28),
- mit einer Koppeleinrichtung (16), der eine Steuereinrichtung (18) zugeordnet ist,
- mit einem Übertragungsmedium (22) für Daten und Befehle, das die Ein- und/oder Ausgänge (24, 28) mit der Koppeleinrichtung (16) verbindet,
- mit parallelen Ein- und/oder Ausgängen (24) die einen Silospeicher (FIFO, 48) und/oder eine Baugruppe für direkten Speicherzugriff (DMA, 50) aufweisen und
- mit seriellen Ein- und/oder Ausgängen (28), die einen Serien-Parallel-Wandler und/oder einen Parallel-Serien-Wandler, und einen Pufferspeicher (32) aufweisen,
- bei dem die Befehle (für die Steuereinrichtung) über die Ein-und/oder Ausgänge (24, 28) geführt werden.

2. Schnittstellenbaustein nach Anspruch 1, dadurch gekennzeichnet, daß über jeden Ein- und/oder Ausgang (24, 28) ein oder mehrere Datenkanäle geführt werden können und daß über jeden Datenkanal sowohl Daten als auch Befehle übermittelt werden können.

3. Schnittstellenbaustein nach Anspruch 1 oder 2, dadurch gekennzeichnet, daß die Datenkanäle Kanäle für pulscodemodulierte Signale sind, daß die über einen gemeinsamen Ein- und/oder Ausgang (24, 28) geführten Datenkanäle im Zeitmultiplex zusammengefaßt sind und daß die Übertragungsgeschwindigkeiten an den einzelnen Ein-und/oder Ausgängen (24, 28) voneinander verschieden und/oder einstellbar sind.

4. Schnittstellenbaustein nach einem der Ansprüche 1 bis 3, dadurch gekennzeichnet, daß die Koppeleinrichtung (16) einen Notizblockspeicher (52) und eine Steuereinrichtung (54) zur Zuordnung von Adressen im Notizblockspeicher (52) enthält.

5. Schnittstellenbaustein nach Anspruch 4, dadurch gekennzeichnet, daß der Notizblockspeicher (52) einen Assoziativspeicher (CAM, 56) für Zielangaben, einen Schreib-Lese-Speicher (RAM, 58) und einen Assoziativspeicher (CAM, 60) für Quellenangaben enthält.

6. Schnittstellenbaustein nach Anspruch 4 oder 5, dadurch gekennzeichnet, daß die Steuereinrichtung (54) eine Vielzahl von Befehlsregistern zum Speichern von Befehlen enthält.

7. Vermittlungssystem (68) mit einem Digital-Koppelnetz (70) und einer Vielzahl daran angeschlossener Modulsteuereinheiten (72), über die der Zugang zum Digital-Koppelnetz (70) erfolgt,
**dadurch gekennzeichnet,**
daß an wenigstens eine Modulsteuereinheit (72) wenigstens ein Schnittstellenbaustein (10) nach einem der Ansprüche 1 bis 6 angeschlossen ist.

8. Vermittlungssystem (112) mit einem Digital-Koppelnetz (114) und mindestens einer Modulsteuereinheit (116), über die Zugang zum Digital-Koppelnetz (114) möglich ist, dadurch gekennzeichnet, daß eine Gruppe von Teilnehmern über einen ersten Schnittstellenbaustein (118) und die Modulsteuereinheit (116) indirekt und über einen zweiten Schnittstellenbaustein (120) direkt Zugang zum Digital-Koppelnetz (114) hat und daß der erste Schnittstellenbaustein (118) und/oder der zweite Schnittstellenbaustein (120) nach einem der Ansprüche 1 bis 7 ausgebildet ist.

9. Vermittlungssystem nach Anspruch 8, dadurch gekennzeichnet, daß der erste Schnittstellenbaustein (118) und die Modulsteuereinheit (116) der Durchschaltevermittlung und der zweite Schnittstellenbaustein (120) der Paketvermittlung dienen.

## Claims

1. An interface module (10) for connecting data sources with data sinks,
- with a plurality of inputs and/or outputs (24, 28),
- with a switch (16) having a controller (18) associated therewith,
- with a transmission medium (22) for data and instructions which connects the inputs and/or outputs (24, 28) with the switch (16),
- with parallel inputs and/or outputs (24) comprising a first-in-first-out memory (FIFO, 48) and/or a direct-memory-access transfer device (DMA, 50), and
- with serial inputs and/or outputs (28) comprising a serial-to-parallel converter and/or a parallel-to-serial converter and a buffer (32),
- wherein the instructions (for the controller) are provided via the inputs and/or outputs (24, 28).

2. An interface module as claimed in claim 1, characterized in that there can be one or more data channels per input and/or output (24, 28), and that both data and instructions can be conveyed via each data channel.

3. An interface module as claimed in claim 1 or 2, characterized in that the data channels are channels for pulse-code-modulated signals, that the data channels common to an input and/or output (24, 28) are combined using time-division multiplexing, and that the data signaling rates at the individual inputs and/or outputs (24, 28) differ and/or are adjustable.

4. An interface module as claimed in any one of claims 1 to 3, characterized in that the switch (16) includes a scratchpad memory (52) and a controller (54) for assigning addresses in the scratchpad memory (52).

5. An interface module as claimed in claim 4, characterized in that the scratchpad memory (52) includes a destination content-addressable memory (CAM, 60), a random-access memory (RAM, 58), and a source content-addressable memory (CAM, 60).

6. An interface module as claimed in claim 4 or 5, characterized in that the controller (54) includes a plurarity of instruction registers for storing instructions.

7. A switching system (68) comprising a digital switching network (70) and a plurality of terminal control elements (72) connected thereto via which the digital switching network (70) is accessed,
**characterized in**
that at least one interface module (10) as claimed in any one of claims 1 to 6 is connected to at least one terminal control element (72).

8. A switching system (112) comprising a digital switching network (114) and at least one terminal control element (116) via which access to the digital switching network (114) is possible, characterized in that a group of subscribers has indirect access to the digital switching network (114) via a first interface module (118) and the terminal control element (116), and direct access to the digital switching network (114) via a second interface module (120), and that the first interface module (118) and/or the second interface module (120) are/is designed as claimed in any one of claims 1 to 7.

9. A switching system as claimed in claim 8, characterized in that the first interface module (118) and the terminal control element (116) serve to establish circuit-switched paths, and that the second interface module (120) serves to establish packet paths.

## Revendications

1. Unité d'interface (10) pour le raccordement de sources de données à des récepteurs de données, comportant:
- une pluralité d'entrées et/ou de sorties (24, 28),
- un dispositif d'établissement de connexions (16) auquel est associée une unité de commande (18),
- un moyen de transmission (22) pour des données et des commandes, réalisant la liaison des entrées et/ou des sorties (24, 28) avec le dispositif de réalisation de connexions (16),
- des entrées et/ou des sorties (24) parallèles munies d'une mémoire du type premier arrivé-premier sorti (FIFO, 48) et/ou un sous-ensemble pour l'accès direct à la mémoire (DMA, 50); et
- des entrées et/ou des sorties (28) sérielles, équipées d'un convertisseur série-parallèle et/ou d'un convertisseur parallèle-série, et une mémoire tampon (32),
dans laquelle les commandes (pour l'unité de commande) passent par les entrées et/ou les sorties (24, 28).

2. Unité d'interface selon la revendication 1, caractérisée en ce qu'un ou une pluralité de canaux de données peuvent transiter par chaque entrée et/ou sortie (24, 28) et en ce que des données ainsi que des commandes peuvent être transmises sur chaque canal de données.

3. Unité d'interface selon la revendication 1 ou 2, caractérisée en ce que les canaux de données sont des voies pour des signaux à modulation par impulsions de codage, en ce que les canaux de données qui transitent par une entrée et/ou une sortie (24, 28) commune sont rassemblés en un multiplexe temporel et en ce que les vitesses de transmission sur les entrées et/ou les sorties (24, 28) sont différentes l'une de l'autre et/ou sont réglables.

4. Unité d'interface selon l'une des revendications 1 à 3, caractérisée en ce que le dispositif d'établissement de connexions (16) comprend une mémoire de travail temporaire (52) et un dispositif de commande (54) pour l'affectation des adresses dans la mémoire de travail temporaire (52).

5. Unité d'interface selon la revendication 4, caractérisée en ce que la mémoire de travail temporaire (52) comporte une mémoire adressable par le contenu (CAM, 56) pour des informations de cible, une mémoire vive (RAM, 58) et une mémoire adressable par le contenu (CAM, 60) pour des informations de source.

6. Unité d'interface selon la revendication 4 ou 5, caractérisée en ce que l'unité de commande (54) comporte une pluralité de registres de commande pour le stockage de commandes.

7. Système de commutation (68) muni d'une matrice de connexion numérique (70) et d'une pluralité d'unités modulaires de commande (72) qui y sont raccordées et qui réalisent l'accès à la matrice de connexion numérique (70), caractérisé en ce qu'au moins l'une des unités d'interface (10) selon l'une des revendications 1 à 6, est raccordée à au moins vingt des unités modulaires de commande (72).

8. Système de commutation (112) muni d'une matrice de connexion numérique (114) et d'au moins une unité modulaire de commande (116) permettant l'accès à la matrice de connexion numérique (114), caractérisé en ce qu'un groupe d'abonnés à l'accès indirect, à travers une première unité d'interface (118) et l'unité modulaire de commande (116), ainsi que l'accès direct à travers une deuxième unité d'interface (120) à la matrice de connexion numérique (114), et en ce que la première unité d'interface (118) et/ou la deuxième unité d'interface (120) est réalisée selon l'une des revendications 1 à 7.

9. Système de commutation selon la revendication 8, caractérisé en ce que la première unité d'interface (118) et l'unité modulaire de commande (116) servent à l'établissement de liaisons commutées, et en ce que la deuxième unité d'interface (120) sert à l'établissement de liaisons par paquets.
